(19) Europäisches Patentamt / European Patent Office / Office européen des brevets

(11) **EP 2 917 763 B1**

(12) **EUROPÄISCHE PATENTSCHRIFT**

(45) Veröffentlichungstag und Bekanntmachung des Hinweises auf die Patenterteilung:
**24.03.2021   Patentblatt 2021/12**

(21) Anmeldenummer: **13792313.2**

(22) Anmeldetag: **11.11.2013**

(51) Int Cl.:
*G01S 17/95* *(2006.01)*     *G01S 17/58* *(2006.01)*
*H04B 10/071* *(2013.01)*   *G01D 5/353* *(2006.01)*
*G01S 7/35* *(2006.01)*     *G01S 17/32* *(2020.01)*
*G01S 7/481* *(2006.01)*

(86) Internationale Anmeldenummer:
**PCT/EP2013/073527**

(87) Internationale Veröffentlichungsnummer:
**WO 2014/072514 (15.05.2014 Gazette 2014/20)**

(54) **LIDAR-MESSSYSTEM UND LIDAR-MESSVERFAHREN**

LIDAR MEASURING SYSTEM AND LIDAR MEASURING PROCESS

SYSTÈME DE MESURE LIDAR ET PROCÉDÉ DE MESURE LIDAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2012  EP 12192232**

(43) Veröffentlichungstag der Anmeldung:
**16.09.2015   Patentblatt 2015/38**

(73) Patentinhaber: **METEK GmbH**
**25337 Elmshorn (DE)**

(72) Erfinder:
- **BRINKMEYER, Ernst**
  **21244 Buchholz (DE)**
- **WATERHOLTER, Thomas**
  **25462 Rellingen (DE)**

(74) Vertreter: **Heinemeyer, Karsten**
**AdvInno Patent-u. Rechtsanwaltspart. mbB**
**Heinemeyer & Joachim**
**Sandstrasse 17-23**
**23552 Lübeck (DE)**

(56) Entgegenhaltungen:
EP-A1- 2 128 588      US-A1- 2004 019 282
US-A1- 2007 046 945   US-A1- 2009 257 743
US-A1- 2012 194 823

- **Shuang Gao: "Complex-optical-field lidar system for range and vector velocity measurement", OPTICS EXPRESS, 1. November 2012 (2012-11-01), XP055058815, Gefunden im Internet: URL:http://www.opticsinfobase.org/DirectPDFAccess/49B4A532-A83A-9804-84C82977F983D5F2_244858/oe-20-23-25867.pdf?da=1&id=244858&seq=0&mobile=no [gefunden am 2013-04-09]**
- **AALDERS M C ET AL: "Measurement of the axial point spread function in scattering media using single-mode fiber-based optical coherence tomography", IEEE JOURNAL OF SELECTED TOPICS IN QUANTUM ELECTRONICS, IEEE SERVICE CENTER, PISCATAWAY, NJ, US, Bd. 9, Nr. 2, 1. März 2003 (2003-03-01), Seiten 227-233, XP011102889, ISSN: 1077-260X, DOI: 10.1109/JSTQE.2003.813299**
- **Mohammad Umar Piracha: "Range resolved lidar for long distance ranging with sub-millimeter resolution", OPTICS EXPRESS, 24. März 2010 (2010-03-24), XP055058812, Gefunden im Internet: URL:http://dx.doi.org/10.1364/OE.18.007184 http://www.opticsinfobase.org/view_article .cfm?gotourl=http%3A%2F%2Fwww.opticsinfobase.org%2FDirectPDFAccess%2FE93E55D5-FAF7-6221-C4E0068595D9690F_196814%2Foe-18-7-7184 .pdf%3Fda%3D1%26id%3D196814%26seq%3D0%26mo bile%3Dno&org= [gefunden am 2013-04-09]**

EP 2 917 763 B1

- BUETTNER L ET AL: "A multimode-fibre laser-Doppler anemometer for highly spatially resolved velocity measurements using low-coherence light; A multimode-fibre LDA", MEASUREMENT SCIENCE AND TECHNOLOGY, IOP, BRISTOL, GB, Bd. 12, Nr. 11, 1. November 2001 (2001-11-01), Seiten 1891-1903, XP020063358, ISSN: 0957-0233, DOI: 10.1088/0957-0233/12/11/319
- LI Y ET AL: "ULTRAWIDEBAND COHERENT NOISE LIDAR RANGE-DOPPLER IMAGING AND SIGNAL PROCESSING BY USE OF SPATIAL-SPECTRAL HOLOGRAPHY IN INHOMOGENEOUSLY BROADENED ABSORBERS", APPLIED OPTICS, OPTICAL SOCIETY OF AMERICA, WASHINGTON, DC; US, Bd. 45, Nr. 25, 1. September 2006 (2006-09-01), Seiten 6409-6420, XP001249789, ISSN: 0003-6935, DOI: 10.1364/AO.45.006409
- ZACHARY COLE RANDY R REIBEL DARYN E BENSON KRISTIAN D MERKEL W RANDALL BABBITT KELVIN WAGNER: "Coherent Lidar Range Processing of Broadband Optical Noise Waveforms", QUANTUM ELECTRONICS AND LASER SCIENCE, 2005 CONFERENCE BALTIMORE, MD, USA 22-27 MAY 2005, PISCATAWAY, NJ, USA,IEEE, Bd. 3, 22. Mai 2005 (2005-05-22), Seiten 1994-1996, XP010887903, ISBN: 978-1-55752-796-7
- Ernst Brinkmeyer: "Continuous wave synthetic low-coherence wind sensing Lidar: motionless measurement system with subsequent numerical range scanning", OPTICS EXPRESS, 17. Januar 2013 (2013-01-17), XP055058805, Gefunden im Internet: URL:http://www.opticsinfobase.org/view_art icle.cfm?gotourl=http%3A%2F%2Fwww.opticsin fobase.org%2FDirectPDFAccess%2FE949EC17-DC 2C-3D79-C684193D6FCEBFE3_248578%2Foe-21 -2- 1872.pdf%3Fda%3D1%26id%3D248578%26seq %3D0% 26mobile%3Dno&org= [gefunden am 2013-04-09]

**Beschreibung**

Die vorliegende Erfindung betrifft ein Lidar-Messsystem zur Detektion der Anwesenheit und/oder Bewegung von Partikeln und/oder Objekten in einem von dem Lidar-Messsystem entfernten Raumbereich und ein Verfahren zur Detektion der Anwesenheit und/oder Bewegung von Partikeln und/oder Objekten in einem entfernten Raumbereich mit Hilfe eines derartigen Lidar-Messsystems.

Lidar (Light detection and ranging) ist ein dem Radar eng verwandtes Verfahren, das statt der im Fall des Radar eingesetzten Funkwellen Laserlicht einsetzt. Mit ihm kann eine Fernmessung verschiedener Atmosphärenparameter und insbesondere aus der Ferne eine Bestimmung der Anwesenheit, des Abstands und der Geschwindigkeit von in der Luft oder einer anderen Atmosphäre befindlichen Partikeln und anderen Objekten vorgenommen werden. Grundsätzlich können alle Partikel, die das verwendete Licht streuen, und alle Objekte vermessen werden, die eine reflektierende Störstelle im Raum oder einen Streukörper darstellen.

Lidar trägt somit dem in verschiedenen Bereichen der Technik bestehenden Bedarf Rechnung, physikalische Parameter an von der eigentlichen Messvorrichtung entfernten Orten ortsaufgelöst, drahtlos und nicht-invasiv als Funktion der Zeit zu bestimmen. Beispielsweise ist es mit Hilfe von Lidar möglich, über die Vermessung durch Wind bewegter Partikel die an einem von der Messvorrichtung entfernten Ort herrschende Windgeschwindigkeit zu ermitteln. Dies kann zum Beispiel ausgenutzt werden, um in einfacher Weise in einigen hundert Metern Entfernung vor einer Windkraftanlage die Windgeschwindigkeit zu messen und auf Basis der gemessenen Windgeschwindigkeit regeltechnische Parameter der Windkraftanlage so anzupassen, dass ein möglichst optimaler Wirkungsgrad erzielt und dabei gleichzeitig die Belastung der Windkraftanlage durch den Wind möglichst gering gehalten wird, und bei extremen Windböen ggf. rechtzeitig Notfallmaßnahmen, wie etwa eine Notabschaltung, zu ergreifen, um eine Beschädigung der Windkraftanlage zu verhindern.

Bekannte Lidar-Systeme zur Bestimmung von Windgeschwindigkeiten beruhen auf der Detektion der durch die Streuung von Laserlicht an mit dem Wind mitbewegten Partikeln bewirkten Doppler-Frequenzverschiebung des Streulichts (vgl. z.B. C. Weitkamp, Lidar - Range-resolved optical remote sensing of the atmosphere, Springer 2005). Daher kann jeweils nur die Windgeschwindigkeit in der Sichtlinie des verwendeten Laserstrahls ermittelt werden.

Die Doppler-Frequenzverschiebung wird in den meisten Fällen interferometrisch durch Überlagerung des an einer Messvorrichtung empfangenen Streulichts mit direktem Licht der verwendeten Laserquelle bestimmt. Zu diesem Zweck werden im Stand der Technik hochkohärente Laserquellen mit Kohärenzlängen von mehreren hundert Metern verwendet, die optischen Quellenbandbreiten im Sub-MHz-Bereich entsprechen. Im Stand der Technik sind zur Erzielung von Ortsauflösung grundsätzlich zwei unterschiedliche Vorgehensweisen bekannt.

Gemäß der einen Vorgehensweise werden Dauerstrich-Laserquellen eingesetzt, deren Strahl mit Hilfe eines geeigneten optischen Systems, wie einer Linse oder eines Teleskops, auf die jeweils gewünschte Zielentfernung fokussiert wird (vgl. z.B. WO 2005/114253 A1). Bei geeigneter Fokussierung stammt dann prinzipiell der größte Teil des empfangenen Streulichtes aus dem fokusnahen Bereich, so dass durch Verschiebung des Fokusbereichs unterschiedliche Teilabschnitte eines interessierenden Raumbereichs in unterschiedlichen Entfernungen untersucht werden können.

Allerdings besteht dabei das grundsätzliche Problem, dass die effektive Fokuslänge in etwa quadratisch mit dem Abstand von dem zur Fokussierung verwendeten optischen System zunimmt, so dass für große Abstände nur noch eine schlechte Ortsauflösung erreichbar ist. Ferner wird jeweils auch Streulicht von Partikeln außerhalb des Fokusbereichs empfangen. Wenn derartige Partikel einen größeren Streuquerschnitt als die Partikel im Fokusbereich haben oder in sehr viel größerer Konzentration als die Partikel im Fokusbereich vorliegen, kann ihr Streulicht doch den größten Teil des empfangenen Streulichtes bilden und das Signal aus dem Fokusbereich überdecken. Ohne aufwändige Maßnahmen würde die gemessene Windgeschwindigkeit dann einem falschen Ort zugeordnet. Ein Beispiel ist eine ggf. deutlich hinter dem Zielbereich, d.h. dem Fokusbereich, befindliche dichte Wolkendecke. Schließlich ist es von Nachteil, dass die Änderung der Fokussierung, die im Allgemeinen mechanisch erfolgt, zusätzlichen apparativen Aufwand erfordert und eine erhebliche Zeit in Anspruch nimmt.

Gemäß der anderen Vorgehensweise werden gepulste Laserquellen eingesetzt, wobei die Ortsbestimmung über eine Laufzeitmessung der Laserpulse erfolgt. Auf diese Weise können mit einem Puls, dessen Pulsbreite die Ortsauflösung bestimmt, die für Pulse mit einer Breite von 200 ns beispielsweise 30 m beträgt, nacheinander mehrere Auflösungselemente zwischen z.B. 0 und 300 m Abstand von dem Messsystem abgefragt werden. Diese Auflösungselemente sind jeweilige Teilabschnitte des interessierenden Raumbereichs, der von den Laserpulsen durchlaufen wird.

Allerdings ergeben sich regelmäßig aufgrund der jeweils nur für kurze Zeit erfolgenden Beleuchtung jedes Auflösungselements durch den Puls schlechte Signal-Rausch-Verhältnisse, und die Frequenzauflösung und damit auch die Windgeschwindigkeitsauflösung ist aufgrund der kurzen Pulsbreiten begrenzt. Außerdem müssen in der Regel relativ aufwändige Lasersysteme mit einem Masteroszillator und einem Leistungsverstärker verwendet werden.

Weiterhin ist bekannt (Shuang Gao: "Complex-optical-field lidar system for range and vector velocity measurement",OPTICS EXPRESS, 1. November 2012 (2012-11-01)), über komplexe I/Q-Modulation eines CW-Laserstrahles eine hohe Ortsauflösung zur Entfernungs- und Geschwindgkeitsmessung zu erreichen. Ziel der Modulation ist es, eine Seitenbandmodulation für die Entfernugnsmessung und eine Seitenbandmodulation für die Geschwindigkeitsmessung zu verwenden.

Es ist Aufgabe der vorliegenden Erfindung, ein einfach aufgebautes Lidar-Messsystem und ein einfach durchzuführendes Lidar-Messverfahren bereitzustellen, mit denen die Anwesenheit und/oder Bewegung von Partikeln in einem ausgedehnten entfernten Raumbereich schnell, flexibel und mit hoher Ortsauflösung bestimmt werden kann und die obigen Nachteile vermieden werden.

Diese Aufgabe wird durch ein Lidar-Messsystem mit den Merkmalen des Anspruchs 1 und durch ein Verfahren mit den Merkmalen des Anspruchs 9 gelöst. Vorteilhafte Ausgestaltungen des Lidar-Messsystems und des Verfahrens sind Gegenstand der jeweils zugehörigen Unteransprüche.

Nach der vorliegenden Erfindung ist vorgesehen, dass ein Lidar-Messsystem zur Detektion der Anwesenheit und/oder Bewegung von Partikeln und/oder Objekten in einem von dem Lidar-Messsystem entfernten Raumbereich eine Interferometeranordnung mit einer Dauerstrich-Laserquelle, einer Photodetektoranordnung, verschiedenen optischen Komponenten zur Leitung von Licht der Dauerstrich-Laserquelle entlang vorbestimmter optischer Wege und einer Auswerteeinheit aufweist.

Die Photodetektoranordnung ist angepasst, um ein Detektorsignal auszugeben, das für auf sie auftreffendes Licht charakteristisch ist, das der Dauerstrich-Laserquelle entstammt. Sie kann eine oder mehrere Photodetektoren aufweisen.

Die optischen Komponenten sind so angepasst und angeordnet, dass von der Dauerstrich-Laserquelle im Betrieb ausgesandtes Licht zunächst aufgeteilt wird, anschließend entlang eines einen Mess- bzw. Signalzweig der Interferometeranordnung bildenden ersten optischen Weges und eines von diesem getrennten und einen Referenzzweig der Interferometeranordnung bildenden zweiten optischen Weges geleitet wird und schließlich nach Durchlaufen des Messzweiges und des Referenzzweiges räumlich kohärent überlagert auf die Photodetektoranordnung auftrifft. Die Interferometeranordnung weist somit den Aufbau eines Mach-Zehnder-Interferometers auf. Dabei hat der Referenzzweig eine vorbestimmte optische Weglänge, und der Messzweig weist einen Messabschnitt auf, in dem das Licht von dem Messsystem weg in Richtung auf einen von diesem entfernten Raumbereich gerichtet ist und diesen zumindest teilweise durchläuft und von in dem Messabschnitt befindlichen Partikeln oder Objekten in Richtung auf das Messsystem rückgestreutes bzw. reflektiertes Licht wieder am Messsystem empfangen wird.

Mit anderen Worten wird ein Teil des optischen Weges des Messzweiges, nämlich der Messabschnitt, durch den Bereich der Umgebung des Messsystems gebildet, aus dem überhaupt Photonen, die von dem Messsystem in Richtung auf den entfernten Raumbereich verlaufen, bis sie an einem Partikel gestreut oder einem Objekt reflektiert werden, wieder zum Messsystem zurückkehren und dort in den Rest des Messzweiges eingekoppelt werden. Dies erfordert, dass zum einen am Beginn des Messabschnitts das den Messzweig durchlaufende Laserlicht mit Hilfe einer geeigneten Einrichtung in Richtung auf den entfernten Raumbereich abgestrahlt wird und dass zum anderen am Ende des Messabschnitts ein Teil des gestreuten Lichtes mit einer geeigneten Empfangseinrichtung empfangen und anschließend entlang des Restes des Messzweiges geleitet wird. Die optische Weglänge des Messzweiges wird somit für jedes Photon durch den Abstand der Partikel bzw. Objekte vom Messsystem bestimmt, von denen das zur Photodetektoranordnung gelangende gestreute oder reflektierte Licht stammt.

Aus den obigen Erläuterungen ist zu entnehmen, dass der entfernte Raumbereich einen Teil des Messabschnitts bildet und im Extremfall mit dem Messabschnitt identisch sein kann. Der Messabschnitt umfasst den Bereich der Umgebung des Messsystems, aus dem überhaupt von Partikeln rückgestreutes oder von Objekten reflektiertes Licht in den Rest des Messzweiges eingekoppelt wird. Demgegenüber ist der entfernte Raumbereich der für die Detektion interessierende Bereich, der kleiner oder maximal gleich dem Messabschnitt gewählt werden kann.

Die Auswerteeinheit ist mit der Photodetektoranordnung gekoppelt und angepasst, um deren Detektorsignal zu empfangen und auf Basis des Detektorsignals die Anwesenheit und/oder Bewegung von Partikeln und/oder Objekten in dem entfernten Raumbereich zu bestimmen. Letzteres kann beispielsweise insbesondere in derselben Weise geschehen, wie es aus dem Stand der Technik bekannt ist. Insbesondere kann die Bewegung und die dabei die Geschwindigkeit in bekannter Weise über die Ermittlung der Dopplerverschiebung des detektierten Lichtes erfolgen.

Die Dauerstrich-Laserquelle ist so ausgestaltet, dass sie eine Kohärenzlänge in dem Bereich von 0,1 bis 100 m aufweist, bevorzugt in dem Bereich von 1 bis 100 m, mehr bevorzugt in dem Bereich von 1 bis 50 m. Da kohärente Interferenz an der Photodetektoranordnung nur für Streulicht von Partikeln bzw. reflektiertes Licht von Objekten möglich ist, für die die optische Weglänge des Messzweiges innerhalb der Kohärenzlänge mit der optischen Weglänge des Referenzzweiges übereinstimmt, wird durch die stark begrenzte Kohärenzlänge eine hohe und durch geeignete Wahl der Kohärenzlänge wählbare Ortsauflösung erreicht. Zur Detektoranordnung gelangendes Streulicht bzw. reflektiertes Licht von außerhalb dieses Kohärenzbereichs befindlichen Partikeln bzw. Objekten führt demgegenüber lediglich zu einem breitbandigen Untergrund im Detektorsignal, der zu einer mäßigen Verringerung des Signal-Rausch-Verhältnisses führen kann, die Ortsauflösung aber nicht beeinträchtigt. Wenn der Kohärenzbereich kleiner als die Ausdehnung des entfernten Raumbereichs entlang dem Laserstrahl ist, wird somit lediglich ein Teilabschnitt des entfernten Raumbereichs vermessen, so dass durch Verschiebung des Kohärenzbereichs - beispielsweise mit Hilfe einer optional vorhandenen Einrichtung zur Änderung der optischen Weglänge des Referenzzweiges, bevorzugt aber rechnerisch auf die weiter unten ausführlich dargelegte Weise - eine durch dessen Ausdehnung bestimmte Ortsauflösung erreicht werden kann. Die Ortsauflösung ist in vorteilhafter Weise unabhängig von der Entfernung des jeweils untersuchten Teilabschnitts, der auch als Auflösungselement bezeichnet werden kann.

In einer bevorzugten Ausführungsform weist die Dauerstrich-Laserquelle eine Laserlicht-Erzeugungskomponente, einen dieser nachgeschalteten optischen Phasenmodulator und eine Steuereinrichtung zur Steuerung des optischen Phasenmodulators auf. Der optische Phasenmodulator ist angepasst, um das von der Laserlicht-Erzeugungskomponente abgestrahlte Laserlicht zu empfangen und in seiner Phase zu modulieren. Er weist einen Steuersignaleingang auf und ist ferner angepasst, um die Phasenmodulation auf Basis einer Phasenfunktion vorzunehmen, die durch ein am Steuersignaleingang empfangenes Steuersignal definiert wird. Die Steuereinrichtung ist mit dem Steuersignaleingang verbunden und angepasst, um an den Steuersignaleingang ein Steuersignal zu liefern, das einem durch eine vorbestimmte Phasenfunktion $\theta(t)$ definierten Rauschsignal bzw. Pseudo-Rauschsignal entspricht, wobei das Steuersignal bewirkt, dass der optische Phasenmodulator die Phasenmodulation mit der vorbestimmten Phasenfunktion $\theta(t)$ vornimmt. Das optische Leistungsdichtespektrum des von der Dauerstrich-Laserquelle abgestrahlten Laserlichts erhält auf diese Weise eine durch die Phasenfunktion $\theta(t)$ bestimmte Form, die z.B. gaußförmig oder lorentzförmig sein kann, und Bandbreite. Die Dauerstrich-Laserquelle kann somit als eine synthetische Laserquelle bezeichnet werden, für die im Unterschied zu natürlichen Laserquellen die Phasenfunktion bekannt ist, die zur einer spektralen Verbreiterung und Verformung des monochromatischen Laserlichtes führt. Die Bandbreite bestimmt dabei in üblicher Weise die Kohärenzlänge. Auf diese Weise kann in vorteilhafter Weise dieselbe Laserlicht-Erzeugungskomponente zur Realisierung verschiedener Kohärenzlängen und damit Ortsauflösungen Verwendung finden. Die Laserlicht-Erzeugungskomponente, die insbesondere eine schmalbandige und bevorzugt einmodige Dauerstrich-Laserdiode sein kann, hat bevorzugt eine Bandbreite von 100 kHz oder weniger und mehr bevorzugt von 10 kHz oder weniger.

In dieser Ausführungsform ist es insbesondere bevorzugt, wenn die vorbestimmte Phasenfunktion $\theta(t)$ einstellbar ist. Eine solche Einstellbarkeit stellt die Möglichkeit der Einstellbarkeit der spektralen Form und/oder der Bandbreite des von der Dauerstrich-Laserquelle abgestrahlten Laserlichts bereit. Für jede gewünschte spektrale Form und/oder Bandbreite kann beispielsweise durch ein iteratives numerisches Verfahren eine entsprechende Phasenfunktion $\theta(t)$ aufgefunden werden.

Im Rahmen eines solchen iterativen Verfahrens wird beispielsweise von einer zufällig gewählten Phasenfunktion, d.h. einem zufälligen Phasenverlauf, oder einer gezielt gewählten Phasenfunktion ausgegangen und rechnerisch die spektrale Form und Bandbreite des von dem mit dieser Phasenfunktion angesteuerten optischen Phasenmodulator ausgegebenen Laserlichts bestimmt und mit der gewünschten spektralen Form und Bandbreite verglichen. Auf Basis des Vergleichs wird die Phasenfunktion modifiziert, und es werden die obigen Schritte wiederholt. Das Verfahren wird so lange fortgesetzt, bis das gewünschte Ergebnis mit hinreichender Genauigkeit erreicht wird. Insbesondere kann ein solches iteratives Verfahren durchgeführt werden, indem von einem Spektrum mit gaußförmigem Betrag und zufälliger Phase ausgegangen wird. Daraus wird die Phase der zugehörigen elektrischen Feldstärke durch inverse Fouriertransformation berechnet und deren Amplitude konstant gesetzt. Aus der so gewonnenen elektrischen Feldstärke wird durch Fouriertransformation das zugehörige Spektrum berechnet und mit dessen Phase der Iterationsprozess von vorne begonnen. Der Prozess wird so lange fortgesetzt, bis das gewünschte Ergebnis, z.B. ein vorgegebenes gaußförmiges Amplituden- und Leistungsdichtespektrum, mit hinreichender Genauigkeit erreicht wird. Unabhängig von der genauen Ausgestaltung ist zu beachten, dass die für ein iteratives Verfahren aufzuwendende Rechenzeit insoweit irrelevant ist, als eine einmal aufgefundene Phasenfunktion dauerhaft Verwendung finden kann.

Diese Ausgestaltung hat den großen Vorteil, dass die Ortsauflösung geändert werden kann, ohne hardwaremäßige Veränderungen oder eine mechanische Bewegung von Komponenten vornehmen zu müssen. Es ist lediglich erforderlich, eine andere geeignete Phasenfunktion $\theta(t)$ an der Steuereinrichtung zu wählen bzw. einzustellen. Im Unterschied zu bekannten Dauerstrich-Lidar-Systemen, bei denen - wie oben erwähnt - die Ortsauflösung durch die insbesondere bei großen Entfernungen begrenzte Fokussierbarkeit eines Laserstrahls stark eingeschränkt ist, kann die Ortsauflösung einfach, flexibel und schnell mit hoher Reproduzierbarkeit in einem weiten Bereich frei gewählt werden. Gleichzeitig werden in der bereits beschriebenen Weise zuverlässig etwaige Störeinflüsse von Streuung an Partikeln bzw. Reflektion an Objekten außerhalb des durch die Kohärenzlänge und die optische Weglänge des Referenzzweiges bestimmten Teilabschnitts des entfernten Raumbereichs, wie etwa von Partikeln in vor- oder nachgelagerten Wolken, unterdrückt, und somit wird die Gefahr einer Fehlzuordnung von gemessenen Geschwindigkeitswerten zu Orten stark verringert.

In den beschriebenen Ausführungsformen, bei denen ein optischer Phasenmodulator vorgesehen ist, ist es ferner bevorzugt, wenn die Auswerteeinheit angepasst ist, um die Auswertung auf Basis einer Funktion des Detektorsignals, der vorbestimmten Phasenfunktion und eines Zeitverschiebungswertes $\Delta t_{Verschiebung}$ vorzunehmen, die in der Weise gewählt ist, dass das Ergebnis der Funktion dem Detektorsignal entspricht, dass sich bei Wahl eines Referenzzweiges ergeben würde, der gegenüber dem tatsächlichen Referenzzweig eine um $\Delta t_{Verschiebung}$ geänderte Laufzeit und damit auch eine entsprechend geänderte optische Weglänge aufweist.

Diese Ausgestaltung beruht auf der Erkenntnis, dass das Detektorsignal nicht nur die für die Auswertung benötigten Informationen über Partikel und Objekte in dem der tatsächlichen optischen Weglänge des Referenzzweiges und der Kohärenzlänge entsprechenden Teilabschnitt des entfernten Raumbereichs enthält, sondern auch jeweils bereits die Informationen über Partikel und Objekte in anderen Teilabschnitten des entfernten Raumbereichs in anderen Abständen vom Messsystem. Für die Auswertung des gesamten entfernten Raumbereichs oder eines größeren Teilabschnitts von diesem ist die Kenntnis der zur Ansteuerung des optischen Phasenmodulators und zur entsprechenden Erzeugung des von der Dauerstrich-Laserquelle abgestrahlten Lichtes verwendeten Phasenfunktion θ(t) erforderlich. Diese ist für eine natürliche Laserquelle nicht bekannt und müsste aufwändig bestimmt werden. Bei der hier verwendeten Dauerstrich-Laserquelle werden dagegen die Phaseneigenschaften des Laserstrahls synthetisch erzeugt, sind nur pseudo-zufällig und liegen in Form der Phasenfunktion θ(t) zahlenmäßig vor. Diese Phasenfunktion θ(t) findet sich in bestimmter Weise in der komplexen Amplitude des Detektorsignals wieder, die auf Grundlage der Kenntnis der Phasenfunktion θ(t) gezielt numerisch verändert werden kann, um dadurch für die Zwecke der Auswertung eine von der tatsächlichen optischen Weglänge abweichende optische Weglänge des Referenzzweiges vorzutäuschen.

Somit kann in vorteilhafter Weise ohne hardwaremäßige Änderungen und ohne mechanische Bewegung von Komponenten nachträglich der Teilabschnitt des entfernten Raumbereichs, aus dem Licht stammt, das sich in der beschriebenen Weise kohärent mit dem Licht des Referenzzweiges überlagert und zur Detektion verwendet wird, d.h. die Lage des Auflösungselements ohne erneute Messung verschoben werden. Anders als bei bekannten Dauerstrich-Lidar-Verfahren können durch eine einzige Messung Informationen aus einem großen Bereich und nicht nur aus dem Fokusbereich gewonnen werden, und die Ortsauflösung kann gezielt und entfernungsunabhängig gewählt werden. Es ist auf diese Weise sehr einfach und flexibel möglich, eine ortsaufgelöste Messung an verschiedenen Teilabschnitten des entfernten Raumbereichs mit einstellbarer Ortsauflösung vorzunehmen und somit aus der Ferne bestimmte Eigenschaften der verschiedenen Teilabschnitte zu bestimmen.

Wenn in Zusammenhang mit der Auswertung und dem entsprechenden Kohärenzbereich von optischer Weglänge die Rede ist, ist vor diesem Hintergrund daher diese "vorgetäuschte" optische Weglänge gemeint.

Es ist bei dieser "numerischen Verschiebung" des Teilabschnittes von Vorteil, wenn die Funktion die Multiplikation des Detektorsignals mit dem Faktor

$$e^{-i\left[\theta\left(t+\Delta t_{Verschiebung}\right)-\theta(t)\right]}$$

umfasst. Es kann gezeigt werden, dass das komplexe Detektorsignal - ggf. neben zeitlich konstanten Anteilen - einen zeitlich variablen Anteil enthält, der proportional zu

$$e^{i\left[\theta(t+t_d)-\theta(t)\right]}$$

ist, wobei $t_d$ der durch die Entfernung der Streupartikel bestimmte Laufzeitunterschied zwischen Referenzzweig und Messzweig ist. Die Multiplikation mit obigem Faktor führt daher zu einem zeitlich variablen Anteil, der proportional zu

$$e^{i\left[\theta(t+t_d)-\theta\left(t+\Delta t_{Verschiebung}\right)\right]}$$

ist und somit einer durch $\Delta t_{Verschiebung}$ bestimmten abweichenden optischen Weglänge des Referenzzweigs entspricht.

In einer bevorzugten Ausgestaltung umfassen die optischen Komponenten einen Strahlteiler, wie zum Beispiel insbesondere einen faseroptischen Koppler, zur Aufteilung des von der Dauerstrich-Laserquelle abgestrahlten Lichtes, optische Fasern, die zumindest einen Teil des Referenzzweiges definieren, und/oder optische Fasern, die einen Teil des Messzweiges definieren, einen optischen Frequenzverschieber, z.B. gebildet durch einen akustooptischen Modulator, im Messzweig und/oder im Referenzzweig, einen optischen Verstärker, z.B. einen Erbium-Faser-Verstärker, im Messzweig oder vor der Aufteilung in Mess- und Referenzzweig, einen einstellbaren Polarisationssteller im Referenzzweig und/oder im Messzweig und/oder einen Strahlvereiniger, insbesondere einen faseroptischen Koppler, zur Vereinigung des entlang des Messzweiges und entlang des Referenzzweiges geführten Lichtes am Ende des Messzweiges und des Referenzzweiges.

In einer bevorzugten Ausgestaltung umfassen die optischen Komponenten eine Abstrahl- und Empfangseinrichtung, die den Beginn und das Ende des Messabschnitts des Messzweiges definiert und angepasst ist, um das Licht von dem Messsystem weg in Richtung auf den Raumbereich abzustrahlen und rückgestreutes Licht wieder zu empfangen, so dass dieses entlang des Restes des Messzweiges geführt wird. Die Abstrahl- und Empfangseinrichtung kann einen Empfänger aufweisen, der räumlich von einer Abstrahleinrichtung getrennt ist (d.h. ein bistatisches System), oder eine Komponente, die an einem Ort sowohl zur Abstrahlung als auch zum Empfang von Laserlicht angepasst ist (d.h. ein monostatisches System). Die kombinierte Abstrahl- und Empfangseinrichtung kann insbesondere einen optischen Zirkulator und/oder ein Linsensystem aufweisen.

In einer bevorzugten Ausführungsform ist die Interferometeranordnung in Form eines Mach-Zehnder-Interferometers mit zwei für einen balancierten Empfang angeordneten und ausgestalteten Photodetektoren aufgebaut, wobei das Detektorsignal eine Differenz der Ausgangssignale der beiden Photodetektoren ist. Auf diese Weise können in an sich bekannter Weise Störungen aus dem Detektorsignal entfernt werden.

In einer bevorzugten Ausführungsform weist das Lidar-Messsystem ferner eine Polarisationsstrahlteileranordnung bzw. ein oder mehrere polarisationsteilende Elemente auf, das bzw. die angeordnet und angepasst ist bzw. sind, um im Betrieb Licht der Dauerstrich-Laserquelle, das entlang des Messzweiges geführt wird, und Licht der Dauerstrich-Laserquelle, das entlang des Referenzzweiges geführt wird, jeweils in Licht zweier orthogonaler Polarisationsrichtungen aufzuteilen.

Außerdem ist die Photodetektoranordnung in dieser Ausführungsform angeordnet und angepasst, um nach Durchlaufen des Messzweiges und des Referenzzweiges das räumlich kohärent überlagerte Licht für die beiden Polarisationsrichtungen separat zu detektieren. Das Detektorsignal umfasst dann zwei Teildetektorsignale, von denen jedes für Licht einer der beiden Polarisationsrichtungen charakteristisch ist. Die Photodetektoranordnung kann beispielsweise zwei separate, räumlich getrennte Photodetektoren aufweisen, und die Polarisationsstrahlteileranordnung kann so angeordnet und ausgestaltet sein, dass das Licht der beiden Polarisationsrichtungen jeweils nur auf einen anderen der beiden Photodetektoren auftrifft.

Durch die obige Anordnung werden die Überlagerungssignale von Messzweig und Referenzzweig nach Polarisationsrichtung getrennt in genau derselben Weise ermittelt, wie es oben unabhängig von der Polarisationsrichtung beschrieben worden ist. Aufgrund der separaten Betrachtung der beiden Polarisationsrichtungen kann jedoch durch die Auswerteeinheit festgestellt werden, ob bei der Streuung oder Reflektion der Polarisationszustand erhalten geblieben ist, was in der Regel überwiegend der Fall ist, oder ob eine Verlagerung in den orthogonalen Polarisationszustand bewirkt worden ist. Ist letzteres der Fall, dann kann man in bekannter Weise Aussagen über Art und Form der Streu- oder Reflexionskörper machen. Die Auswerteeinheit ist dementsprechend angepasst, um auf Basis der beiden Teildetektorsignalen Änderungen des Polarisationszustandes durch die detektierten Partikel und/oder Objekte zu bestimmen und ggf. Informationen über Art und/oder Form der detektierten Partikel und/oder Objekte zu liefern.

In einer bevorzugten Ausführungsform eines Lidar-Messsystem, in dem die Auswerteeinheit angepasst ist, um die Auswertung auf Basis einer Funktion des Detektorsignals, der vorbestimmten Phasenfunktion und eines Zeitverschiebungswertes $\Delta t_{Verschie\text{-}bung}$ vorzunehmen, ist die Laserlicht-Erzeugungskomponente angepasst, um gleichzeitig oder abwechselnd Laserlicht zweier Wellenlängen abzustrahlen. Da der optische Phasenmodulator auf beide Wellenlängen einwirkt, umfasst das von der Dauerstrich-Laserquelle abgestrahlte Laserlicht zwei Wellenlängenbereiche in der Umgebung der beiden Wellenlängen, in denen das optische Leistungsdichtespektrum jeweils eine durch die Phasenfunktion $\theta(t)$ bestimmte Form und Bandbreite hat.

Außerdem ist die Photodetektoranordnung in dieser Ausführungsform im Falle gleichzeitiger Emission beider Wellenlängen durch die Laser-Erzeigungskomponente so angeordnet und angepasst, um nach Durchlaufen des Messzweiges und des Referenzzweiges das räumlich kohärent überlagerte Licht für die beiden Wellenlängenbereiche separat zu detektieren. Das Detektorsignal umfasst dann zwei Teildetektorsignale, von denen jedes für Licht eines der beiden Wellenlängenbereiche charakteristisch ist. Bei zeitlich getrennter Abstrahlung der beiden Wellenlängen entsprechen die während der entsprechenden Zeitabschnitte gelieferten Detektorsignale den beiden Teildetektorsignalen.

Durch die obige Anordnung werden die Überlagerungssignale von Messzweig und Referenzzweig nach den beiden Wellenlängenbereichen getrennt in genau derselben Weise ermittelt, wie es oben unabhängig vom Wellenlängenbereich beschrieben worden ist. Wenn sich neben streuenden Partikeln und/oder reflektierenden Objekten Gas zwischen diesen und dem Messsystem befindet und dieses Gas das Licht des einen Wellenlängenbereichs absorbiert, das Licht des anderen Wellenlängenbereichs dagegen nicht oder sehr viel weniger, kann aufgrund der separaten Betrachtung der beiden Wellenlängenbereiche jedoch durch die Auswerteeinheit die absorbierende Gasmenge festgestellt werden. Wird nun die Auswertung in der beschriebenen Weise für eine Vielzahl unterschiedlicher Zeitverschiebungswerte $\Delta t_{Ver\text{-}schiebung}$ vorgenommen, die jeweils einem anderen Teilabschnitt des entfernten Raumbereichs entsprechen, kann ferner ortsaufgelöst die Konzentration des Gases in den verschiedenen Teilabschnitten ermittelt werden. Dieses Verfahren ist mit Ausnahme der erfindungsgemäßen Art und Weise der Erzielung von Ortsauflösung an sich bekannt und wird als DIAL-Verfahren (differential absorption Lidar) bezeichnet.

Die Auswerteeinheit ist dementsprechend angepasst, um die Auswertung auf Basis einer Funktion der beiden Teildetektorsignale, der vorbestimmten Phasenfunktion und einer Vielzahl unterschiedlicher Zeitverschiebungswerte $\Delta t_{Verschiebung}$ vorzunehmen, die jeweils einem anderen Teilabschnitt des entfernten Raumbereichs entsprechen, und ortsaufgelöst die Konzentration mindestens eines Gases zu bestimmen, das für die beiden Wellenlängenbereiche unterschiedliche Absorptionskoeffizienten aufweist. Da die Messung darauf beruht, dass das Laserlicht bei der Streuung nicht wesentlich durch thermische Bewegung der Streukörper spektral verbreitert wird, ist es zwingend erforderlich, dass zusätzlich zu dem zu vermessenden Gas geeignete Partikel und/oder Objekte in dem entfernten Raumbereich vorhanden sind.

Das oben beschriebene Lidar-Messsystem, in dem die Auswerteeinheit angepasst ist, um die Auswertung auf Basis einer Funktion des Detektorsignals, der vorbestimmten Phasenfunktion und eines Zeitverschiebungswertes $\Delta t_{Verschiebung}$ vorzunehmen, kann in vorteilhafter Weise Teil einer Lidar-Messanordnung sein, die außerdem einen optischen Wellenleiter, bevorzugt einen einmodigen optischen Faserwellenleiter, aufweist, der in der Weise angeordnet ist, dass den Messzweig durchlaufendes Licht der Dauerstrich-Laserquelle in zumindest einem Teil des Messabschnitts in dem optischen Wellenleiter geführt wird, so dass der optische Wellenleiter zumindest einen Teil des Messabschnitts definiert. Mit anderen Worten wird ein Teil des Raumbereichs und insbesondere ein Teil des Messabschnitts durch das Innere des optischen Wellenleiters gebildet.

Außerdem weist der optische Wellenleiter der Messanordnung eine Vielzahl von Reflexionseinrichtungen auf, die entlang des optischen Wellenleiters voneinander beabstandet sind und von denen jede angeordnet und angepasst ist, um bei mindestens einer Wellenlänge, bei der von der Dauerstrich-Laserquelle Licht ausgesandt werden kann, Licht, das den optischen Wellenleiter von dem Messsystem weg durchläuft, teilweise so zu reflektieren, das das reflektierte Licht den optischen Wellenleiter in Richtung auf das Messsystem durchläuft. Diese Reflexionseinrichtungen stellen jeweils ein Objekt dar, dessen Anwesenheit und/oder Bewegung durch das Messsystem in der beschriebenen Weise bestimmt werden kann. Der optische Wellenleiter kann bevorzugt mindestens zehn Reflexionseinrichtungen aufweisen.

In dieser Ausführungsform ist die Auswerteeinheit angepasst, um die oben beschriebene Auswertung, die auf Basis einer Funktion des Detektorsignals, der vorbestimmten Phasenfunktion und eines Zeitverschiebungswertes $\Delta t_{Verschiebung}$ durchgeführt wird, zu verschiedenen Zeitpunkten und für eine Vielzahl unterschiedlicher Zeitverschiebungswerte $\Delta t_{Verschiebung}$ vorzunehmen, die jeweils einem anderen Teilabschnitt des entfernten Raumbereichs entsprechen, wobei die entsprechende Vielzahl unterschiedlicher Teilabschnitte verschiedene der Reflexionseinrichtungen und/oder verschiedene Gruppen der Reflexionseinrichtungen enthält.

Außerdem ist die Auswerteeinheit in dieser Ausführungsform angepasst, um daraus Änderungen der Reflektivität und/oder Polarisationseigenschaften verschiedener Reflexionseinrichtungen zu bestimmen, für mindestens ein Paar der Reflexionseinrichtungen Änderungen der optischen Phasenverschiebung zwischen den entsprechenden zwei Reflexionseinrichtungen zu bestimmen, für mindestens ein Paar der Reflexionseinrichtungen eine Dämpfung zwischen den entsprechenden zwei Reflexionseinrichtungen zu bestimmen und/oder für mindestens ein Paar der Reflexionseinrichtungen Polarisationsänderungen zwischen den entsprechenden zwei Reflexionseinrichtungen zu bestimmen.

Durch diese Ausgestaltung bildet die Lidar-Messanordnung einen faseroptischen Sensor, in dem die entlang des optischen Wellenleiters angeordneten Reflexionseinrichtungen einzelne Sensorelemente darstellen und der faseroptische Sensor beispielsweise für Dehnungsmessungen in Brücken oder Flugzeugflügeln eingesetzt werden kann oder in dem die Abschnitte des optischen Wellenleiters zwischen benachbarten Reflexionseinrichtungen und die betreffenden beiden Reflexionseinrichtungen jeweils ein interferometrisches Sensorelement darstellt. In jedem Fall können durch geeignete Wahl der Zeitverschiebungswerte $\Delta t_{Verschiebung}$ die verschiedenen Sensorelemente separate adressiert und ausgewertet werden, wenn die den verschiedenen Zeitverschiebungswerten $\Delta t_{Verschiebung}$ entsprechenden Teilabschnitte des entfernten Raumbereichs jeweils ein anderes der Sensorelemente ganz oder teilweise enthalten. In diesem Zusammenhang ist zu beachten, dass im Fall interferometrischer Sensorelemente in Abhängigkeit von der Bandbreite des verwendeten Laserlichtes die Teilabschnitte eine geringere Ausdehnung (hohe Ortsauflösung) oder eine größere Ausdehnung (niedrige Ortsauflösung) als der Abstand zwischen den beiden Reflexionseinrichtungen der Sensorelemente haben können. Im ersteren Fall können die beiden Reflexionseinrichtungen im Hinblick auf die durch den dazwischen befindlichen Abschnitt des optischen Wellenleiters verursachte Phasenverschiebung getrennt ausgewertet werden und/oder es die eine durch eine Messgröße beeinflusste Dämpfung quantifiziert werden. Im zweiten Fall ist dies nicht möglich und die beiden genannten Reflexionseinrichtungen mit dem dazwischen befindlichen Abschnitt des optischen Wellenleiters können nur gemeinsam ausgewertet werden. Sie bilden dann zusammen ein Sensorelement und wirken wie ein kohärenter interferometrischer Sensor.

Die Reflexionseinrichtungen sind bevorzugt angepasst, um ihre Reflektivität oder ihre Polarisationseigenschaften durch Einwirkung einer Messgröße zu verändern, wie zum Beispiel einer Temperatur. Alternativ ist es bevorzugt, wenn die zu interferometrischen Sensorelementen gehörigen Abschnitte des optischen Wellenleiters angepasst sind, um ihren optischen Weg durch Einwirkung einer Messgröße, wie etwa einer Dehnung des optischen Wellenleiters, zu verändern. In jedem Fall ist es durch die oben beschriebene Auswertung dann möglich, ortsaufgelöst entlang des optischen Wellenleiters die Messgröße zu bestimmen.

In einer bevorzugten Ausgestaltung der Lidar-Messanordnung weisen die Reflexionseinrichtungen jeweils eine Fehlstelle, eine Rayleigh-Rückstreu-Einrichtung und/oder ein Faser-Bragg-Gitter auf. Eine Fehlstelle kann beispielsweise durch eine Glas-Luft-Grenzfläche gebildet werden.

In einer bevorzugten Ausgestaltung der Lidar-Messanordnung ist die Ausdehnung der Reflexionseinrichtungen in Erstreckungsrichtung des optischen Wellenleiters kleiner als der minimale Abstand zwischen benachbarten Reflexionseinrichtungen.

Das oben beschriebene Messsystem bzw. die oben beschriebene, ein solches Messsystem aufweisende Messanordnung kann in vorteilhafter Weise zur Durchführung eines Verfahrens zur Detektion der Anwesenheit und/oder Bewegung von Partikeln und/oder Objekten in einem entfernten Raumbereich verwendet werden. Dazu wird der Messzweig in der Weise angeordnet, d.h. insbesondere der Messabschnitt so angeordnet, dass der entfernte Raumbereich Teil des Messabschnitts ist oder im Extremfall den Messabschnitt bildet. Dabei wird die Dauerstrich-Laserquelle betrieben, um Laserlicht in der beschriebenen Weise gleichzeitig entlang des Messzweiges und entlang des Referenzzweiges zu leiten. Die Anwesenheit und/oder Bewegung von Partikeln und/oder Objekten in dem entfernten Raumbereich wird dann mit Hilfe der Auswerteeinheit in der ebenfalls bereits beschriebenen Weise ermittelt.

In einer vorteilhaften Ausgestaltung des Verfahrens, in der ein Lidar-Messsystem mit einer einen optischen Phasenmodulator enthaltenden Dauerstrich-Laserquelle zum Einsatz kommt, wird die Form und/oder die Bandbreite des optischen Leistungsdichtespektrums des von der Dauerstrich-Laserquelle abgestrahlten Laserlichts eingestellt, indem die vorbestimmte Phasenfunktion $\theta(t)$ an der Steuereinrichtung entsprechend eingestellt wird. Auf diese Weise kann die Ortsauflösung gezielt an die jeweiligen Anforderungen angepasst werden.

In einer vorteilhaften Ausgestaltung des Verfahrens, in der ein Lidar-Messsystem zum Einsatz kommt, das eine einen optischen Phasenmodulator enthaltenden Dauerstrich-Laserquelle und eine Auswerteeinheit enthält, die angepasst ist, um die Auswertung auf Basis einer Funktion des Detektorsignals, der vorbestimmten Phasenfunktion und eines Zeitverschiebungswertes $\Delta t_{Verschiebung}$ vorzunehmen, wird an der Auswerteeinheit das Zeitintervall $\Delta t_{Verschiebung}$ verändert, um die Entfernung eines Teilabschnitts des Raumbereichs von dem Lidar-Messsystem zu verändern, wobei der Teilabschnitt die Partikel enthält, deren rückgestreutes Licht bei der kohärenten Überlagerung des entlang des Messzweiges geführten Lichtes und des entlang des Referenzzweiges geführten Lichtes zur Interferenz beiträgt.

In einer vorteilhaften Ausgestaltung des Verfahrens, in der eines der oben beschriebene Lidar-Messsysteme zum Einsatz kommt, das Licht zweier unterschiedlicher Polarisationsrichtungen detektiert, werden mit Hilfe der Auswerteeinheit auf Basis der beiden Teildetektorsignalen Änderungen des Polarisationszustandes durch die detektierten Partikel und/oder Objekte bestimmt und daraus Information über die Art und/oder Form der Partikel und/oder Objekte gewonnen.

In einer vorteilhaften Ausgestaltung des Verfahrens, in der eines der oben beschriebene Lidar-Messsysteme zum Einsatz kommt, das Licht zweier unterschiedlicher Wellenlängenbereiche detektiert, wird mit Hilfe der Auswerteeinheit auf Basis einer Funktion der beiden Teildetektorsignale, der vorbestimmten Phasenfunktion und einer Vielzahl unterschiedlicher Zeitverschiebungswerte $\Delta t_{Verschiebung}$, die jeweils einem anderen Teilabschnitt des entfernten Raumbereichs entsprechen, ortsaufgelöst die Konzentration mindestens eines Gases bestimmt, das für die beiden Wellenlängenbereiche unterschiedliche Absorptionskoeffizienten aufweist.

In einer vorteilhaften Ausgestaltung des Verfahrens unter Verwendung einer Lidar-Messanordnung sind die Reflexionseinrichtungen so angepasst, dass sie in Abhängigkeit einer auf sie einwirkenden Messgröße ihre Reflektivität und/oder ihre Polarisationseigenschaften ändern, oder die zwischen jeweils zwei benachbarten Reflexionseinrichtungen befindlichen Abschnitte des optischen Wellenleiters sind so angepasst, dass sie in Abhängigkeit einer auf sie einwirkenden Messgröße ihren optischen Weg ändern. In jedem Fall wird mit Hilfe der Auswerteeinheit an verschiedenen Reflexionseinrichtungen oder verschiedenen Abschnitten zwischen Reflexionseinrichtungen entsprechenden Orten die Messgröße bestimmt.

In einer vorteilhaften Ausgestaltung des Verfahrens unter Verwendung einer Lidar-Messanordnung ist die Messgröße eine Dehnung des optischen Wellenleiters, eine Schwingung des optischen Wellenleiters und/oder eine Temperatur ist.

In einer vorteilhaften Ausgestaltung des Verfahrens unter Verwendung einer Lidar-Messanordnung werden die Reflexionseinrichtungen durch Fehlstellen oder Rayleigh-Rückstreu-Bereiche gebildet und der optische Wellenleiter mit Hilfe der Auswerteeinheit längenaufgelöst charakterisiert. Durch dieses Verfahren können Faserstrecken untersucht werden, indem aus der Änderung des Detektorsignals für benachbarte Messorte auf die lokale Dämpfung geschlossen wird. Dieses Verfahren kann die Verwendung von Zeitbereichsreflektometern ersetzen.

Die Erfindung wird im Folgenden anhand eines Ausführungsbeispiels unter Bezugnahme auf die beigefügten Zeichnungen näher erläutert, in denen

Figur 1 eine schematische Darstellung eines Lidar-Messsystems gemäß eines Ausführungsbeispiels der Erfindung zeigt und

Figur 2 eine schematische Darstellung einer Dauerstrich-Laserlichtquelle gemäß eines Ausführungsbeispiels der Erfindung zeigt und

Figur 3 eine schematische Darstellung Lidar-Messsystems als Teil einer Lidar-Messanordnung gemäß eines Ausführungsbeispiels der Erfindung zeigt.

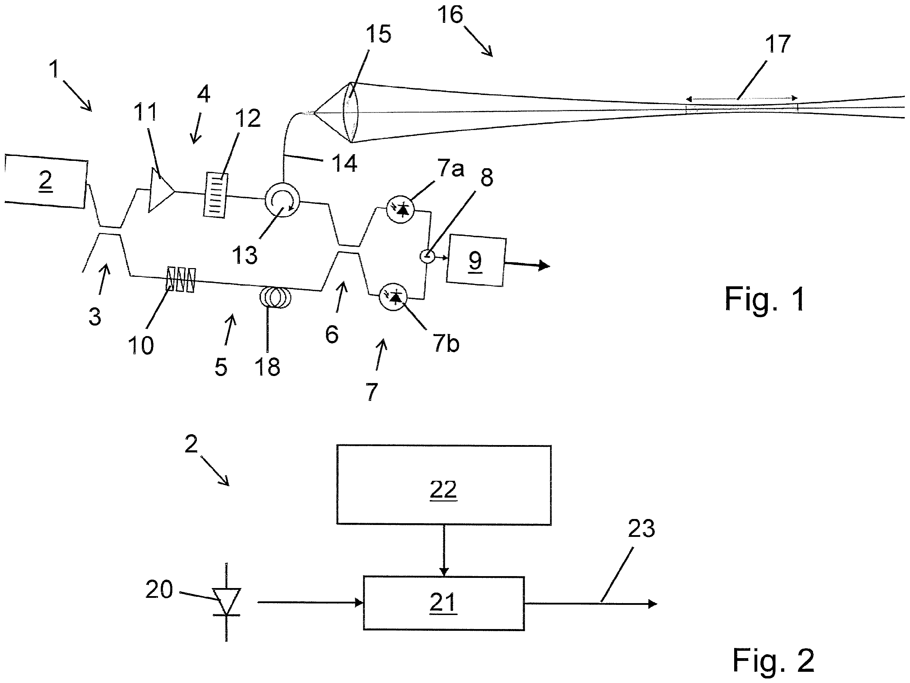

Das in Figur 1 schematisch gezeigte Lidar-Messsystem 1 weist eine Dauerstrich-Laserquelle 2 mit einer Ausgangsleistung von z.B. 1 mW und einer Wellenlänge von z.B. 1530 nm auf, deren Licht durch einen Strahlteiler 3 in Form eines faseroptischen Kopplers auf einen teilweise faseroptisch definierten Messzweig 4 und einen vollständig faseroptisch definierten Referenzzweig 5 aufgeteilt wird. Die verwendeten optischen Fasern sind bevorzugt Monomodefasern mit niedriger Dämpfung und einem Feldradius von z.B. 5 $\mu$m. Am Ende von Messzweig 4 und Referenzzweig 5 ist ein weiterer faseroptischer Koppler 6 zur Vereinigung des Lichtes von Messzweig 4 und Referenzzweig 5 angeordnet. Wie in einer bekannten Mach-Zehnder-Interferometeranordnung wird das Licht dabei räumlich kohärent überlagert, und verschiedene Anteile des kohärent überlagerten Lichtes werden auf die beiden Photodetektoren 7a, 7b der Photodetektoranordnung 7 gelenkt, die beispielsweise InGaAs-Detektoren sein können und deren für das auf sie auftreffende Licht charakteristischen Detektorsignale in einem Subtraktionselement 8 zur Eliminierung von Störungen voneinander subtrahiert werden. Das Differenzsignal wird schließlich einer Auswerteeinheit 9 zugeführt, in der das Differenzsignal zur Detektion der Anwesenheit und/oder Bewegung von Partikeln und/oder Objekten ausgewertet wird.

Der Referenzzweig 5 weist einen einstellbaren faseroptischen Polarisationssteller 10 auf und eine Umwegstrecke, beispielsweise in Form eines aufgewickelten Abschnitts 18 der Faser. Der Messzweig 4 weist nacheinander einen Erbium-Faser-Verstärker 11 mit einer Ausgangsleistung von z.B. 1 W, einen akustooptischen Modulator 12 mit einer Frequenz von z.B. 80 MHz und einen optischen Zirkulator 13 auf.

Mit Hilfe des Zirkulators 13 wird Licht über einen Faserabschnitt 14 einer Sende/Empfangslinse 15 einer Brennweite von z.B. 250 mm zugeleitet und in den das Messsystem 1 umgebenden Bereich fokussiert. Trifft das Licht in diesem Bereich in der Weise auf rückstreuende Partikel, dass es wieder zu der Linse 15 gelangt, wird es wieder in den Faserabschnitt 14 und anschließend über den Zirkulator 13 in den Rest des Messabschnitts 4 eingekoppelt. Der Bereich, in dem überhaupt Licht durch Rückstreuung an Partikeln wieder zu der Linse 15 gelangen kann, stellt einen Messabschnitt 16 des Messzweiges 4 dar. Die Anwesenheit und/oder Bewegung von Partikeln und/oder Objekten kann in dem gesamten Messabschnitt 16 oder nur in einem Teil von diesem detektiert werden, der in der vorliegenden Anmeldung als entfernter Raumbereich bezeichnet wird. Der entfernte Raumbereich ist demnach der für eine bestimmte Messung interessierende Teil des Messabschnitts 16.

Die Dauerstrich-Laserquelle 2 weist eine Laserdiode 20 und einen nachgeschalteten optischen Phasenmodulator 21 auf, dessen Modulationsverhalten durch eine Steuereinrichtung 22 gesteuert wird, die die für die Modulation bestimmende und ein Pseudo-Rauschsignal definierende Phasenfunktion $\theta(t)$ vorgibt. Das von dem optischen Phasenmodulator 21 bzw. der Dauerstrich-Laserquelle 2 abgestrahlte Laserlicht 23 ist gegenüber dem Licht der Laserdiode 20 durch die Modulation als Funktion der Phasenfunktion $\theta(t)$ im optischen Leistungsdichtespektrum verbreitert und verformt.

Durch die oben beschriebene Berücksichtigung verschiedener Zeitverschiebungswerte $\Delta t_{Verschiebung}$ bei der Auswertung durch die Auswerteeinheit 9 kann rein rechnerisch ohne Veränderungen an dem beschriebenen Aufbau die Detektion ortsaufgelöst für verschiedene Teilabschnitte 17 in unterschiedlichen Abständen von der Linse 15 separat vorgenommen werden.

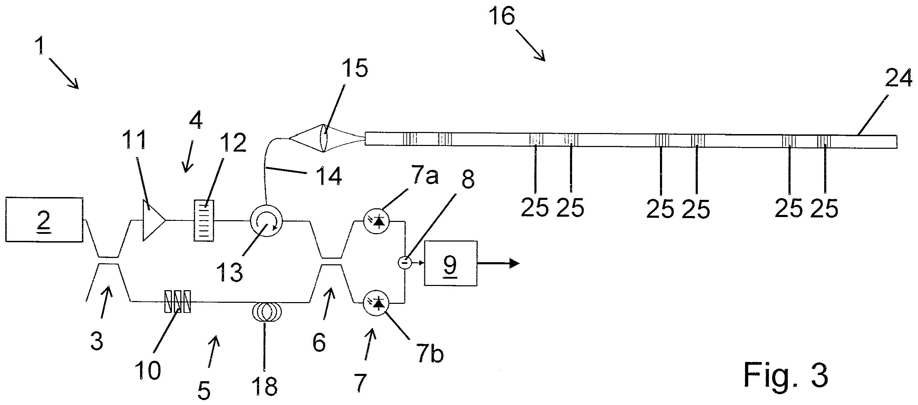

Figur 3 zeigt eine Lidar-Messanordnung, die ein Lidar-Messsystem 1 aufweist, wie es auch in Figur 1 gezeigt ist. Allerdings wird der Messabschnitt 16 durch einen optischen Wellenleiter in Form einer optischen Faser 24 definiert, d.h. durch das lichtleitende Innere der Faser 24. Entlang der Faser 24 sind eine Vielzahl in der Erstreckungsrichtung der Faser 24 voneinander beabstandeter Reflexionseinrichtungen 25 vorgesehen, die jeweils teilweise das Licht der Dauerstrich-Laserquelle 2 reflektieren. In dieser Messanordnung stellen die Reflexionseinrichtungen 25 die Partikel bzw. Objekte dar, deren Anwesenheit und/oder Bewegung gemessen wird und/oder für die weitere Eigenschaften, wie etwa Reflexionseigenschaften oder Polarisationseigenschaften gemessen werden.

**Patentansprüche**

1. Lidar-Messsystem zur Detektion der Anwesenheit und/oder Bewegung von Partikeln und/oder Objekten in einem von dem Lidar-Messsystem entfernten Raumbereich mit einer Interferometeranordnung, die aufweist:

   eine Dauerstrich-Laserquelle (2),
   eine Photodetektoranordnung (7), die angepasst ist, um ein für auf sie auftreffendes Licht der Dauerstrich-Laserquelle (2) charakteristisches Detektorsignal auszugeben, optische Komponenten, die so angepasst und angeordnet sind, dass von der Dauerstrich-Laserquelle (2) ausgesandtes Licht (23)

   - zunächst aufgeteilt wird,
   - anschließend entlang eines einen Messzweig (4) der Interferometeranordnung bildenden ersten optischen Weges und eines von diesem getrennten und einen Referenzzweig (5) der Interferometeranordnung bildenden zweiten optischen Weges geleitet wird und

- schließlich nach Durchlaufen des Messzweiges (4) und des Referenzzweiges (5) räumlich kohärent überlagert auf die Photodetektoranordnung (7) auftrifft,
- wobei der Referenzzweig (5) eine vorbestimmte optische Weglänge hat und
- der Messzweig (4) einen Messabschnitt (16) aufweist, in dem das Licht von dem Messsystem weg in Richtung auf einen von diesem entfernten Raumbereich gerichtet ist und diesen durchläuft und von in dem Raumbereich befindlichen Partikeln und/oder Objekten in Richtung auf das Messsystem rückgestreutes bzw. reflektiertes Licht wieder am Messsystem empfangen wird, und

eine Auswerteeinheit (9), die mit der Photodetektoranordnung (7) gekoppelt und angepasst ist, um deren Detektorsignal zu empfangen und aus dem Detektorsignal die Anwesenheit und/oder Bewegung von Partikeln und/oder Objekten in dem entfernten Raumbereich zu bestimmen,
**dadurch gekennzeichnet, dass** die Dauerstrich-Laserquelle (2) eine Kohärenzlänge in dem Bereich von 0,1 bis 100 m aufweist und dass
die Dauerstrich-Laserquelle (2) aufweist:

eine Laserlicht-Erzeugungskomponente (20),
einen dieser nachgeschalteten optischen Phasenmodulator (21), der angepasst ist, um das von der Laserlicht-Erzeugungskomponente (20) abgestrahlte Laserlicht zu empfangen und in seiner Phase zu modulieren, wobei der optische Phasenmodulator (21) einen Steuersignaleingang aufweist und angepasst ist, um die Phasenmodulation auf Basis einer Phasenfunktion vorzunehmen, die durch ein am Steuersignaleingang empfangenes Steuersignal definiert wird, und
eine Steuereinrichtung (22), die mit dem Steuersignaleingang des optischen Phasenmodulators (21) verbunden und angepasst ist, um an den Steuersignaleingang ein Steuersignal zu liefern, das einem durch eine vorbestimmte Phasenfunktion $\theta(t)$ definierten Pseudo-Rauschsignal entspricht, wobei das Steuersignal bewirkt, dass der optische Phasenmodulator (21) die Phasenmodulation mit der vorbestimmten Phasenfunktion $\theta(t)$ vornimmt, so dass das optische Leistungsdichtespektrum des von der Dauerstrich-Laserquelle (2) abgestrahlten Laserlichts (23) eine durch die Phasenfunktion $\theta(t)$ bestimmte Form und Bandbreite hat.

2. Lidar-Messsystem nach Anspruch 1 bei dem die Dauerstrich-Laserquelle (2) eine Kohärenzlänge in dem Bereich von 1 bis 50 m aufweist.

3. Lidar-Messsystem nach Anspruch 1 oder 2, bei dem die vorbestimmte Phasenfunktion $\theta(t)$ einstellbar ist.

4. Lidar-Messsystem nach einem der Ansprüche 1 bis 3, bei dem die Auswerteeinheit (9) angepasst ist, um die Auswertung auf Basis einer Funktion des Detektorsignals, der vorbestimmten Phasenfunktion und eines Zeitverschiebungswertes $\Delta t_{Verschiebung}$ vorzunehmen, wobei die Funktion in der Weise gewählt ist, dass das Ergebnis der Funktion dem Detektorsignal bei einer gegenüber der tatsächlichen Laufzeit durch den Referenzzweig (5) um $\Delta t_{Verschiebung}$ geänderten Laufzeit durch den Referenzzweig (5) entspricht.

5. Lidar-Messsystem nach Anspruch 4, bei dem die Funktion die Multiplikation des Detektorsignals mit dem Faktor $\exp[-i(\theta(t+\Delta t_{Verschiebung})-\theta(t))]$ umfasst.

6. Lidar-Messsystem nach einem der vorhergehenden Ansprüche, bei dem die optischen Komponenten umfassen:

einen Strahlteiler (3) zur Aufteilung des von der Dauerstrich-Laserquelle (2) abgestrahlten Lichtes (23),
optische Fasern, die zumindest einen Teil des Referenzzweiges (5) definieren, und/oder optische Fasern, die einen Teil des Messzweiges (4) definieren,
einen optischen Frequenzverschieber, insbesondere einen akustooptischen Modulator, im Messzweig (4) oder im Referenzzweig (5),
einen optischen Verstärker (11), insbesondere einen Erbium-Faser-Verstärker, im Messzweig (4) oder vor der Aufteilung in Mess- (4) und Referenzzweig (5),
einen einstellbaren Polarisationssteller im Referenzzweig (5) oder Messzweig (4) und/oder einen Strahlvereiniger, insbesondere einen faseroptischen Koppler (6), zur Vereinigung des entlang des Messzweiges (4) und entlang des Referenzzweiges (5) geführten Lichtes am Ende des Messzweiges (4) und des Referenzzweiges (5).

7. Lidar-Messsystem nach einem der vorhergehenden Ansprüche,

- das ferner eine Polarisationsstrahlteileranordnung aufweist, die angeordnet und angepasst ist, um im Betrieb Licht (23) der Dauerstrich-Laserquelle (2), das entlang des Messzweiges (4) geführt wird, und Licht (23) der Dauerstrich-Laserquelle (2), das entlang des Referenzzweiges (5) geführt wird, jeweils in Licht zweier orthogonaler Polarisationsrichtungen aufzuteilen, und
- bei dem die Photodetektoranordnung (7) angeordnet und angepasst ist, um nach Durchlaufen des Messzweiges (4) und des Referenzzweiges (5) das räumlich kohärent überlagerte Licht für die beiden Polarisationsrichtungen separat zu detektieren, wobei das Detektorsignal zwei Teildetektorsignale umfasst, von denen jedes für Licht einer der beiden Polarisationsrichtungen charakteristisch ist,
- wobei die Auswerteeinheit (9) ferner angepasst ist, um auf Basis der beiden Teildetektorsignale Änderungen des Polarisationszustandes durch die detektierten Partikel und/oder Objekte zu bestimmen.

8.  Lidar-Messsystem nach Anspruch 4, nach Anspruch 5 oder nach einem der Ansprüche 6 bis 7, soweit er von Anspruch 4 oder Anspruch 5 abhängig ist, bei dem

    - die Laserlicht-Erzeugungskomponente (20) angepasst ist, um Laserlicht zweier Wellenlängen abzustrahlen, so dass das von der Dauerstrich-Laserquelle (2) abgestrahlte Laserlicht zwei Wellenlangenbereiche in der Umgebung der beiden Wellenlängen umfasst, in denen das optische Leistungsdichtespektrum jeweils eine durch die Phasenfunktion $\theta(t)$ bestimmte Form und Bandbreite hat,
    - die Photodetektoranordnung (7) angeordnet und angepasst ist, um nach Durchlaufen des Messzweiges (4) und des Referenzzweiges (5) das räumlich kohärent überlagerte Licht für die beiden Wellenlängenbereiche separat zu detektieren, wobei das Detektorsignal zwei Teildetektorsignale umfasst, von denen jedes für Licht eines der beiden Wellenlängenbereiche charakteristisch ist, und
    - die Auswerteeinheit (9) ferner angepasst ist, um die Auswertung auf Basis einer Funktion der beiden Teildetektorsignale, der vorbestimmten Phasenfunktion und einer Vielzahl unterschiedlicher Zeitverschiebungswerte $\Delta t_{Verschiebung}$ vorzunehmen, die jeweils einem anderen Teilabschnitt (17) des entfernten Raumbereichs entsprechen, und ortsaufgelöst die Konzentration mindestens eines Gases bestimmen, das für die beiden Wellenlängenbereiche unterschiedliche Absorptionskoeffizienten aufweist.

9.  Verfahren zur Detektion der Anwesenheit und/oder Bewegung von Partikeln und/oder Objekten in einem entfernten Raumbereich mit Hilfe eines Lidar-Messsystems nach einem der Ansprüche 1 bis 8, mit den Schritten:

    Anordnen des Messzweiges (4) in der Weise, dass der entfernte Raumbereich Teil des Messabschnitts (16) ist,
    Betreiben der Dauerstrich-Laserquelle (2), um Laserlicht gleichzeitig entlang des Messzweiges (4) und entlang des Referenzzweiges (5) zu leiten, und
    Bestimmen der Anwesenheit und/oder Bewegung von Partikeln und/oder Objekten in dem entfernten Raumbereich mit Hilfe der Auswerteeinheit (9).

10. Verfahren nach Anspruch 9, bei dem das Lidar-Messsystem nach einem der Ansprüche 1 bis 8 ausgestaltet ist und das ferner den Schritt aufweist, die Form und/oder die Bandbreite des optischen Leistungsdichtespektrums des von der Dauerstrich-Laserquelle (2) abgestrahlten Laserlichts (23) einzustellen, indem die vorbestimmte Phasenfunktion $\theta(t)$ an der Steuereinrichtung (22) entsprechend eingestellt wird.

11. Verfahren nach Anspruch 9 oder Anspruch 10, bei dem das Lidar-Messsystem nach Anspruch 4 oder Anspruch 5 ausgestaltet ist und das ferner den Schritt aufweist, an der Auswerteeinheit (9) das Zeitintervall $\Delta t_{Verschiebung}$ zu verändern, um die Entfernung eines Teilabschnitts (17) des Raumbereichs von dem Lidar-Messsystem zu verändern, wobei der Teilabschnitt (17) die Partikel und/oder Objekte enthält, deren rückgestreutes Licht bei der kohärenten Überlagerung des entlang des Messzweiges (4) geführten Lichtes und des entlang des Referenzzweiges (5) geführten Lichtes zur Interferenz beiträgt.

12. Verfahren nach einem der Ansprüche 9 bis 11, bei dem das Lidar-Messsystem nach Anspruch 8 ausgestaltet ist, und bei dem mit Hilfe der Auswerteeinheit (9) auf Basis einer Funktion der beiden Teildetektorsignale, der vorbestimmten Phasenfunktion und einer Vielzahl unterschiedlicher Zeitverschiebungswerte $\Delta t_{Verschiebung}$ die jeweils einem anderen Teilabschnitt (17) des entfernten Raumbereichs entsprechen, ortsaufgelöst die Konzentration mindestens eines Gases bestimmt wird, das für die beiden Wellenlängenbereiche unterschiedliche Absorptionskoeffizienten aufweist.

**Claims**

1.  A lidar measurement system for detecting the presence and/or movement of particles and/or objects in a spatial region remote from the lidar measurement system using an interferometer assembly, comprising:

a continuous-wave laser source (2),
a photodetector arrangement (7) adapted to output a detector signal characteristic for light from the continuous-wave laser source (2) incident thereon,
optical components adapted and arranged such that light (23) emitted from the continuous-wave laser source (2)

- is first split,
- then guided along a first optical path forming a measuring branch (4) of the interferometer assembly and along a second optical path, separate from the first optical path, forming a reference branch (5) of the interferometer assembly, and
- finally, after passing through the measuring branch (4) and the reference branch (5), is incident on the photodetector arrangement (7) in a spatially coherently superimposed manner,
- wherein the reference branch (5) has a predetermined optical pathlength, and
- the measuring branch (4) has a measuring section (16), in which the light is directed away from the measurement system in the direction of a spatial region remote therefrom and passes through the same, and light backscattered or reflected, resp., towards the measurement system by particles and/or objects located in the spatial region is once again received at the measurement system, and

an evaluation unit (9) coupled to the photodetector arrangement (7) and adapted to receive its detector signal and to determine the presence and/or movement of particles and/or objects in the remote spatial region from the detector signal, **characterized in that** the continuous-wave laser source (2) has a coherence length in the range of 0.1 to 100 m, and
the continuous-wave laser source (2) comprising:

a laser light-generating component (20),
an optical phase modulator (21) arranged downstream thereof, adapted to receive the laser light radiated by the laser light-generating component (20) and to modulate the same in its phase,
wherein the optical phase modulator (21) has a control signal input and is adapted to carry out phase modulation based on a phase function defined by a control signal received at the control signal input, and
a control device (22) connected to the control signal input of the optical phase modulator (21) and adapted to deliver a control signal to the control signal input, which corresponds to a pseudo-noise signal defined by a predetermined phase function $\theta(t)$, wherein the control signal causes the optical phase modulator (21) to carry out phase modulation with the predetermined phase function $\theta(t)$, so that the optical power density spectrum of the laser light (23) radiated by the continuous-wave laser source (2) has a shape and bandwidth determined by the phase function $\theta(t)$.

2. The lidar measurement system according to claim 1, wherein the continuous-wave laser source (2) has a coherence length in the range of 1 to 50 m.

3. The lidar measurement system according to claim 1 or 2, wherein the predetermined phase function $\theta(t)$ is adjustable.

4. The lidar measurement system according to any one of claims 1 to 3, wherein the evaluation unit (9) is adapted to carry out the evaluation based on a function of the detector signal, the predetermined phase function, and a time-shift value $\Delta t_{Shift}$, wherein the function is selected in such a way that the result of the function corresponds to the detector signal at a propagation time through the reference branch (5) altered by $\Delta t_{Shift}$ compared to the actual propagation time through the reference branch (5).

5. The lidar measurement system according to claim 4, wherein the function comprises multiplication of the detector signal by the factor $\exp[-i(\theta(t+\Delta t_{Shift})-\theta(t))]$.

6. The lidar measurement system according to any one of the preceding claims, wherein the optical components comprise:

a beam splitter (3) for splitting the light (23) radiated by the continuous-wave laser source (2), optical fibers, which define at least part of the reference branch (5), and/or optical fibers, which define part of the measuring branch (4), an optical frequency shifter, in particular an acousto-optical modulator, in the measuring branch (4) or in the reference branch (5),
an optical amplifier (11), in particular an erbium fiber amplifier, in the measuring branch (4) or upstream from the split into measuring branch (4) and reference branch (5),
an adjustable polarization controller in the reference branch (5) or the measuring branch (4), and/or

a beam combiner, in particular a fiber-optic coupler (6), for combining the light guided along the measuring branch (4) and along the reference branch (5) at the end of the measuring branch (4) and the reference branch (5).

7. The lidar measurement system according to any one of the preceding claims,

- further comprising a polarization beam splitter arrangement arranged and adapted to respectively split light (23) from the continuous-wave laser source (2), which is guided along the measuring branch (4), and light (23) from the continuous-wave laser source (2), which is guided along the reference branch (5), into light of two orthogonal polarization directions while in operation, and
- wherein the photodetector arrangement (7) is arranged and adapted to separately detect the spatially coherently superimposed light for the two polarization directions following passing through the measuring branch (4) and the reference branch (5), wherein the detector signal comprises two detector sub-signals, each of which being characteristic for light of one of the two polarization directions,
- wherein the evaluation unit (9) is further adapted to determine alterations of the polarization state caused by the detected particles and/or objects based on the two detector sub-signals.

8. The lidar measurement system according to claim 4, according to claim 5, or according to any one of claims 6 to 7, insofar as it is dependent on claim 4 or claim 5, wherein

- the laser light-generating component (20) is adapted to radiate laser light of two wavelengths, so that the laser light radiated by the continuous-wave laser source (2) comprises two wavelength ranges in the vicinity of the two wavelengths, wherein the optical power density spectrum respectively has a shape and bandwidth determined by the phase function θ(t),
- the photodetector arrangement (7) is arranged and adapted to separately detect the spatially coherently superimposed light for the two wavelength ranges following passing through the measuring branch (4) and the reference branch (5), wherein the detector signal comprises two detector sub-signals, each of which is characteristic for light of one of the two wavelength ranges, and
- the evaluation unit (9) is further adapted to carry out the evaluation based on a function of the two detector sub-signals, the predetermined phase function, and a plurality of different time shift values $\Delta t_{Shift}$, which respectively correspond to another sub-section (17) of the remote spatial region, and to determine the concentration of at least one gas, which has different absorption coefficients for the two wavelength ranges, in a spatially resolved manner.

9. A method for detecting the presence and/or movement of particles and/or objects in a remote spatial region using a lidar measurement system according to any one of claims 1 to 8, comprising the steps of:

arranging the measuring branch (4) in such a way that the remote spatial region is part of the measuring section (16), operating the continuous-wave laser source (2) to guide laser light simultaneously along the measuring branch (4) and along the reference branch (5), and determining the presence and/or movement of particles and/or objects in the remote spatial region using the evaluation unit (9).

10. The method according to claim 9, wherein the lidar measurement system according to any one of claims 1 to 8 is embodied, and further comprising the step of adjusting the shape and/or the bandwidth of the optical power density spectrum of the laser light (23) radiated by the continuous-wave laser source (2) by respectively adjusting the predetermined phase function θ(t) at the control device (22).

11. The method according to claim 9 or claim 10, wherein the lidar measurement system according to claim 4 or claim 5 is embodied, and further comprising the step of altering the time interval $\Delta t_{Shift}$ at the evaluation unit (9) in order to alter the distance of a sub-section (17) of the spatial region from the lidar measurement system, wherein the sub-section (17) includes the particles and/or objects, the backscattered light of which contributes to interference upon coherent superposition of the light guided along the measuring branch (4) and the light guided along the reference branch (5).

12. The method according to any one of claims 9 to 11, wherein the lidar measurement system according to claim 8 is embodied, and wherein, using the evaluation unit (9), the concentration of at least one gas, which has different absorption coefficients for the two wavelength ranges, is determined in a spatially resolved manner based on a function of the two detector sub-signals, the predetermined phase function, and a plurality of different time shift values $\Delta t_{Shift}$, which respectively correspond to another sub-section (17) of the remote spatial region.

## Revendications

1. Système de mesure lidar pour détecter la présence et/ou le mouvement de particules et/ou d'objets dans une zone d'espace éloignée de ce système de mesure lidar, comprenant un agencement d'interféromètre, lequel comprend:

   une source laser à onde continue (2),
   un agencement de photo détecteur (7) adapté pour émettre un signal du détecteur caractéristique de la lumière provenant de ladite source laser à onde continue (2) et qui arrive sur cet agencement,
   des composants optiques adaptés et agencés de telle sorte que la lumière (23) qui est émise par ladite source laser à onde continue (2),

      - soit d'abord séparée,
      - soit, ensuite, dirigée le long d'un premier trajet optique, formant une branche de mesure (4) dudit agencement d'interféromètre, et le long d'un second trajet optique, séparé du premier trajet et formant une branche de référence (5) dudit agencement d'interféromètre, et
      - arrive, enfin, après avoir passé par ladite branche de mesure (4) et par ladite branche de référence (5), sur ledit agencement de photo détecteur (7) de façon superposée spatialement cohérente,
      - ladite branche de référence (5) présentant une longueur de trajet optique prédéterminée et
      - ladite branche de mesure (4) présentant une section de mesure (16) dans laquelle la lumière est dirigée à l'écart du système de mesure en direction d'une zone d'espace éloignée de celui-ci et passe par celle-ci et dans laquelle les particules et/ou objet présents dans cette zone d'espace rétrodiffusent ou bien reflètent de la lumière en direction du système de mesure, laquelle sera reçue par le système de mesure, et

   une unité d'évaluation (9) couplée audit agencement de photo détecteur (6) et adaptée pour recevoir son signal du détecteur et pour déterminer, à partir de ce signal du détecteur, la présence et/ou le mouvement de particules et/ou d'objets dans la zone d'espace éloigné, **caractérisé en ce que** ladite source laser à onde continue (2) présente une longueur de cohérence dans la plage de 0,1 à 100 m et **en ce que** ladite source laser à onde continue (2) présente:

      un composant générateur de lumière laser (20),

   un modulateur de phase optique (21) connecté en aval de celui-ci et qui est adapté pour recevoir la lumière laser émise par ledit composant générateur de lumière laser (20) et pour en moduler la phase, ledit modulateur de phase optique (21) ayant une entrée de signal de commande et étant adapté pour effectuer la modulation de phase sur la base d'une fonction de phase définie par un signal de commande reçu à l'entrée de signal de commande, et
   un dispositif de commande (22), qui est connecté à l'entrée du signal de commande dudit modulateur de phase optique (21) et adapté pour fournir à l'entrée du signal de commande un signal de commande correspondant à un signal de pseudo-bruit défini par une fonction de phase prédéterminée $\theta(t)$,
   ledit signal de commande entraînant que ledit modulateur de phase optique (21) effectue la modulation de phase avec la fonction de phase prédéterminée $\theta(t)$ de sorte que le spectre de densité de puissance optique de ladite lumière laser (23) émise par ladite source laser à onde continue (2) ait une forme et une largeur de bande déterminées par ladite fonction de phase $\theta(t)$.

2. Système de mesure lidar selon la revendication 1, dans lequel ladite source laser à onde continue (2) a une longueur de cohérence dans une plage de 1 à 50 m.

3. Système de mesure lidar selon la revendication 1 ou 2, dans lequel la fonction de phase prédéterminée $\theta(t)$ est réglable.

4. Système de mesure lidar selon l'une des revendications 1 à 3, dans lequel ladite unité d'évaluation (9) est adaptée pour effectuer l'évaluation sur la base d'une fonction du signal du détecteur, de la fonction de phase prédéterminée et d'une valeur de déphasage $\Delta t_{déphasé}$, la fonction étant sélectionnée de telle sorte que le résultat de la fonction corresponde au signal du détecteur à un temps de transit à travers ladite branche de référence (5) modifié de $\Delta t_{déphasé}$ par rapport au temps de transit réel à travers ladite branche de référence (5).

5. Système de mesure lidar selon la revendication 4, dans lequel la fonction comprend la multiplication du signal du détecteur par le facteur $\exp[-i(\theta(t+\Delta t_{déphasé})-\theta(t))$.

6. Système de mesure lidar selon l'une des revendications précédentes, dans lequel les composants optiques comprennent:

un séparateur de faisceau (3) pour séparer la lumière (23) émise par ladite source laser à onde continue (2),

des fibres optiques qui définissent au moins une partie de ladite branche de référence (5) et/ou des fibres optiques qui définissent une partie de ladite branche de mesure (4),

un décaleur de fréquence optique, en particulier un modulateur acousto-optique, dans ladite branche de mesure (4) ou dans ladite branche de référence (5),

un amplificateur optique (11), en particulier un amplificateur à fibre d'erbium, dans ladite branche de mesure (4) ou en amont de la bifurcation en branche de mesure (4) et branche de référence (5),

un ajusteur de polarisation réglable dans ladite branche de référence (5) ou la branche de mesure (4) et/ou

un combineur de faisceaux, en particulier un coupleur à fibre optique (6), pour regrouper la lumière dirigée le long de ladite branche de mesure (4) et celle dirigée le long de ladite branche de référence (5) à l'extrémité de ladite branche de mesure (4) et de ladite branche de référence (5).

7. Système de mesure lidar selon l'une des revendications précédentes,

- lequel comprend, en outre, un agencement de séparateur de faisceau de polarisation qui est disposé et adapté de manière à séparer, en fonctionnement, la lumière (23) de ladite source laser à onde continue (2), qui est dirigée le long de ladite branche de mesure (4), et la lumière (23) de la source laser à onde continue (2), qui est dirigée le long de ladite branche de référence (5), pour obtenir de la lumière de deux directions de polarisation orthogonales, et
- dans lequel ledit agencement de photo détecteur (7) est disposé et adapté de manière à détecter la lumière superposée spatialement cohérente individuellement pour chacune des directions de polarisation après qu'elle ait passé par ladite branche de mesure (4) et ladite branche de référence (5), le signal du détecteur comprenant deux signaux du détecteur partiels dont chacun est caractéristique de la lumière de l'une des deux directions de polarisation,
- ladite unité d'évaluation (9) étant, en outre, adaptée pour déterminer, sur la base des deux signaux partiels du détecteur, les changements de l'état de polarisation par les particules et/ou objets détectés.

8. Système de mesure lidar selon la revendication 4, selon la revendication 5 ou selon l'une des revendications 6 à 7, dans la mesure où elle dépend de la revendication 4 ou de la revendication 5, dans lequel

- ledit composant générateur de lumière laser (20) est adapté pour émettre une lumière laser de deux longueurs d'onde, de sorte que la lumière laser émise par ladite source laser à onde continue (2) comporte deux plages de longueurs d'onde dans l'environnement des deux longueurs d'onde, dans lesquelles le spectre de densité de puissance optique a une forme et une largeur de bande déterminées par la fonction de phase θ(t),
- l'agencement de photo détecteur (7) est disposé et adapté pour détecter la lumière superposée spatialement cohérente individuellement pour chacune des plages de longueurs d'onde, après que la lumière ait passé par ladite branche de mesure (4) et ladite branche de référence (5), le signal du détecteur comprenant deux signaux partiels du détecteur, dont chacun est caractéristique de l'une des deux plages de longueurs d'onde, et
- ladite unité d'évaluation (9) est, en outre, adaptée pour effectuer l'évaluation sur la base d'une fonction des deux signaux partiels du détecteur, la fonction de phase prédéterminée et une multitude de valeurs de déphasage différentes $\Delta t_{\text{déphasé}}$, chacune correspondant à une section différente (17) de ladite zone d'espace éloignée, et pour déterminer, avec résolution spatiale, la concentration d'au moins un gaz ayant des coefficients d'absorption différents pour les deux plages de longueurs d'onde.

9. Procédé pour détecter la présence et/ou le mouvement de particules et/ou d'objets dans une zone d'espace éloignée à l'aide d'un système de mesure lidar selon l'une des revendications 1 à 8, comprenant les étapes suivantes:

disposer ladite branche de mesure (4) de manière à ce que ladite zone d'espace éloignée fasse partie de la section de mesure (16), faire fonctionner ladite source laser à onde continue (2) pour diriger la lumière laser simultanément le long de ladite branche de mesure (4) et le long de ladite branche de référence (5), et déterminer la présence et/ou le mouvement de particules et/ou d'objets dans la zone d'espace éloignée à l'aide de ladite unité d'évaluation (9).

10. Procédé selon la revendication 9, dans lequel ledit système de mesure lidar est conçu selon l'une des revendications 1 à 8 et qui comprend, en outre, l'étape consistant à ajuster la forme et/ou la largeur de bande du spectre de densité de puissance optique de la lumière laser (23) émise par ladite source laser à onde continue (2) en ajustant en conséquence la fonction de phase prédéterminée θ(t) au niveau dudit dispositif de commande (22).

11. Procédé selon la revendication 9 ou la revendication 10, dans lequel ledit système de mesure lidar est conçu selon la revendication 4 ou la revendication 5 et qui comprend, en outre, l'étape consistant à modifier l'intervalle de temps $\Delta t_{déphasé}$ au niveau de ladite unité d'évaluation (9) afin de modifier la distance d'une section partielle (17) de la zone d'espace par rapport au système de mesure lidar, cette section partielle (17) contenant les particules et/ou objets dont la lumière rétrodiffusée contribue à l'interférence dans la superposition cohérente de la lumière dirigée le long de ladite branche de mesure (4) et de la lumière dirigée le long de ladite branche de référence (5).

12. Procédé selon l'une des revendications 9 à 11, dans lequel ledit système de mesure lidar est conçu selon la revendication 8 et dans lequel la concentration d'au moins un gaz ayant des coefficients d'absorption différents pour les deux plages de longueur d'onde est déterminée, avec résolution spatiale, à l'aide de ladite unité d'évaluation (9) sur la base d'une fonction des deux signaux partiels du détecteur, de la fonction de phase prédéterminée et d'une multiplicité de valeurs de déphasage différentes $\Delta t_{déphasé}$, correspondant chacune à une section (17) de la zone d'espace éloignée.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005114253 A1

**In der Beschreibung aufgeführte Nicht-Patentliteratur**

- **C. WEITKAMP, LIDAR.** Range-resolved optical remote sensing of the atmosphere. Springer, 2005

- **SHUANG GAO.** Complex-optical-field lidar system for range and vector velocity measurement. *OPTICS EXPRESS,* 01. November 2012